# EUROPEAN PATENT APPLICATION

(11) **EP 2 824 745 A1**
(43) Date of publication of application: **14.01.2015**
(21) Application number: 13382283.3
(22) Date of filing: 08.07.2013
(51) Int. Cl.: H01M 8/18, H01M 12/08

(54) **Rechargeable zinc-air flow battery**

(71) Applicant: Técnicas Reunidas, S.A., 28830 San Fernando de Henares (Madrid) (ES)
(72) Inventor: AMUNATEGUI VALLEJO, Maria Belén, E-28830 San Fernando de Henares - Madrid (ES); IBÁÑEZ LLANO, Ana, E-28830 San Fernando de Henares - Madrid (ES); SIERRA DE LA GUARDIA, Miguel, E-28830 San Fernando de Henares - Madrid (ES); FRADES TAPIA, María, E-28830 San Fernando de Henares - Madrid (ES); GONZÁLEZ, Daniel, E-20009 San Sebastián - Guipúzcoa (ES); AGUIRRE, Patricio, E-20009 San Sebastián - Guipúzcoa (ES)
(74) Representative: ABG Patentes, S.L.

(57) **Abstract**

The present invention relates to a rechargeable zinc-air flow battery comprising a tank configured to contain an aqueous solution of zinc in an alkaline metal hydroxide, a battery stack in fluid communication with the tank, said battery stack comprising a zinc electrode which comprises: (i) a support, said support comprises a mixture of carbon material and a polymer, and (ii) metallic zinc electrodeposited on the surface of the support; (iii) a cavity adapted to house the aqueous solution, (iv) a bifunctional air electrode comprising an oxygen reduction layer, an oxygen evolution layer and, optionally, a gas diffusion layer, characterized in that both the oxygen reduction layer and oxygen evolution layer comprise a nickel-based support; (v) a separator disposed between the air electrode and the zinc electrode, and (vi) a mechanism for allowing the circulation of the aqueous solution through the battery stack and the tank.

## Description

### FIELD OF THE INVENTION

The present invention relates to the field of batteries. More specifically, the present invention relates to secondary (i.e., rechargeable) batteries and battery systems, and in particular to zinc-air batteries.

### BACKGROUND

The integration of intermittent sources of renewable energy such as wind and solar is a challenge from the point of view of matching supply and demand of energy and the stability and operation of the power network. An effective means of storing electrical energy such as batteries can facilitate increased integration of non-dispatchable sources of renewable energy. Among all of the battery technologies, metal-air batteries are very attractive because of their very high energy densities at low cost, mainly due to the use of atmospheric oxygen as their cathode reactant. Compared to other batteries of similar size, the use of atmospheric oxygen allows the metal-air cell to contain more anode material to provide a large energy capacity. Therefore, a longer lifetime is obtained.

Among the metal-air batteries, the zinc-air battery technology is the most popular and the only commercialized technology. Zinc is an advantageous material because it is lightweight, non-toxic, inexpensive, readily available, and has rapid electrochemical reaction rates for plating during electrochemical charging. Because of this, zinc-air cells have been used as primary (throwaway) and to a lesser extent as rechargeable (reusable) cells.

Zinc-air cells may be recharged mechanically or electrically, however the electrical recharge is commonly preferred. In the more practical electrically rechargeable cells, electricity from an external source can be used to generate oxygen at the air electrode, while zinc metal may be electrochemically re-deposited (plated) back onto the metal electrode, to reconstitute the original metal electrode. Both of these zinc air systems typically use alkaline aqueous electrolytes based on highly caustic potassium hydroxide, KOH.

During normal cell operation (cell discharge), oxygen from surrounding air may be reduced, while the reactive metal undergoes oxidation. In zinc air cells containing alkaline electrolyte, the following simplified cell reactions may occur:

Zn + 40H⁻ → Zn(OH)₄⁼ + 4e⁻

O₂ + 2H₂O + 4e⁻ → 4OH⁻

One of the major problems associated with the use of the zinc electrode in secondary (rechargeable) cells is the formation of dendrites during the recharging of the cell which reduces the number of cycles during which the cell delivers its full charging and discharging capabilities.

In fact, the formation of dendrites is typically one of the primary life cycle-limiting factors for secondary zinc-based batteries. The high power capability of the zinc electrode is at least in part a result of the formation of zincate and/or other salts in the electrolyte (e.g, alkaline media), since the zincate helps to prevent passive film formation on the zinc. In conventional secondary zinc-based batteries, as the mobility of zincate is high in a liquid electrolyte, the zincate concentration in the inter-phase between the air electrode and the zinc electrode increases with depth of discharge. When saturation is reached, zinc oxide is formed. The formation and dissolution of zinc oxide is the rate determining step for charging the zinc electrode. Due to the low dissolution rate of zinc oxide when charging, the zincate in the inter-phase reacts and the deposition of the zinc in the inter-phase causes the formation of dendrites.

Another common failure mode is anode shape changing, where the zinc redistributes unevenly on the plate during charge/discharge cycling, causing deformation on the cell stack, and ultimate failure. These failure modes are not necessarily instantaneous in the life of the cell or battery, but can result in a steady falloff of performance (for instance, capacity fading and voltage irregularities).

On the other hand, the air electrode used in conventional zinc-air batteries generally has graphite as material support. When the battery is charged carbon from the graphite support is oxidized to CO₂. The loss of the graphite support leads to electrode break down after a short number of cycles. Additionally, the accumulation of oxygen gas in the pores leads to pressure build up and mechanical failure of the electrode.

CO2 from the electrode also slowly reacts with the alkaline electrolyte to form insoluble carbonate species. These insoluble carbonates precipitate within the pores of the air electrode and also in the electrolyte. This generated precipitate lowers electrical conductivity of the electrolyte, and, because air electrode pores are being blocked by insoluble material, air electrode performance is markedly reduced.

The round-trip energy efficiency of the zinc-air battery is limited by the sluggish kinetics of the oxygen reactions. An effective catalyst can reduce the overpotentials of the oxygen evolution and oxygen reduction reactions and increase the efficiency of the battery. The catalyst should be stable, have high specific surface area and be finely dispersed over the air electrode surface. Preferably the catalyst should not rely on precious metals to minimize the cost of the battery.

There have been various attempts to mainly overcome the formation of dendrites and shape changes in the anode in electrically rechargeable zinc-air systems over the years, but none has provided a commercially feasible, long cycle life solution. In one approach, the zinc is bonded in place using a polymer binder and additives that inhibit zinc dendrite formation or shape change on charge. In another approach, the active zinc is mixed with a material (e.g. calcium oxide) that chemically traps the zinc plate discharge product (zinc oxide) in an insoluble form (calcium zincate) before it can escape by partial dissolution into the alkaline electrolyte. Endurance can also be improved somewhat by incorporation of zinc dendrite-resistant multilayer separator systems that are ultimately punctured by dendrites and usually increase cell resistance. In a yet further approach, the zinc active material is contoured and pre-distributed on the negative plate so as to allow redistribution at the plate edges where shape change is particularly problematic, or an auxiliary electrode is positioned near the plate edges to dissolve off the excess of the zinc collecting there. In these and other approaches the occurrence of the problem is merely postponed, but not remedied.

Another approach is the use of a flow battery which reduces significantly the problem associated with the formation of dendrites and shape changes, as the zincate ion is continuously recirculating through the battery system.

In this sense, document WO2011/002792 describes a zinc-air flow battery system wherein the zinc electrode is combined with the electrolyte in a container to form a zinc paste which serves as reactant for the battery. Said zinc paste is transported through reaction tubes that include the air-electrode, thus reducing the concentration gradients of zincate. However, a dense paste is required in order to obtain a higher specific capacity/electrochemical storage capacity and, consequently, especial devices in the form of screws should be incorporated in the system to obtain a homogeneous paste.

Pan, J. et al. [Electrochemistry Communications, 2009, 11, 2191-2194] also describes a zinc-air flow battery wherein a liquid electrolyte is stored in an external tank and recirculated through the internal passage of the battery, whereas electrodeposited zinc is used as a negative electrode. However, the configuration of the air electrode does not confer the battery with the property of being bifunctional, and the use of graphite as support of said air electrode entails the already mentioned problems of the oxidation of carbon.

Another limiting factor with conventional metal-air batteries is the evaporation of the electrolyte solution (i.e., the ionically conductive medium), particularly the evaporation of the solvent, such as water in an aqueous electrolyte solution. To compensate for this problem, metal-air batteries with aqueous electrolyte solution are typically designed to contain a relatively high volume of electrolyte solution, lowering the energy density. Alternatively, some cell designs incorporate means for replenishing the electrolyte from an adjacent reservoir to maintain the electrolyte level. However, with this approach there is little control of the salt concentration inside of the cell.

In view of that, there remains a need to identify and produce a rechargeable zinc-air battery which does not suffer from these limitations and therefore, overcomes the problems of the prior art.

### BRIEF DESCRIPTION OF THE INVENTION

The authors of the present invention have designed a new rechargeable zinc-air flow battery which substantially prevents dendrite formation in the anode as the zincate ion is continuously recirculated through the battery, thus reducing the build up of concentration gradients for the zincate. As stated previously, preventing the formation of stable dendrites helps minimize the risk of internal short circuits. In addition, the recirculation of the zincate ion through the battery also reduces significantly the shape change of the anode.

Furthermore, the transport of the electrolyte during operation substantially removes any undesirable gas formation which is otherwise detrimental to the operation life of the system.

The use of a liquid electrolyte which includes the precursor of the metal electrode or the oxidation product of the metal electrode reduces the problems of heterogeneity associated with the use of zinc paste in combination of the electrolyte described in the prior art.

Additionally, the zinc-air battery of the invention uses a nickel-based support in the air electrode which overcomes the problems derived from the conventional use of graphite, thus avoiding the oxidation of carbon and the formation of carbon dioxide, as well as the mechanical destruction of the electrode and the catalyst-support contact, and improving the durability of the air electrode and its cycling performance.

Overall, the combination of these features provides a rechargeable zinc-air battery with an improved energy density, durability and low cost with respect to other zinc-air batteries of the state of the art.

Thus, a first aspect of the present invention relates to a rechargeable zinc-air flows battery comprising:

A rechargeable zinc-air flow battery comprising:
a) at least one tank configured to contain an aqueous solution of zinc oxide in an alkaline metal hydroxide, said tank provided with at least an inlet and an outlet to allow the circulation of the aqueous solution through the tank;
b) a battery stack in fluid communication with the tank, said battery stack comprising:
   b.1) a zinc electrode which comprises: (i) a support, said support comprises a carbon composite, and (ii) metallic zinc electrodeposited on the surface of the support;
   b.2) a cavity adapted to house the aqueous solution, said cavity provided with an inlet and an outlet so as to allow the continuous circulation of the aqueous solution through the cavity;
   b.3.) a bifunctional air electrode comprising an oxygen reduction layer, an oxygen evolution layer and, optionally, a gas diffusion layer, **characterized in that** both the oxygen reduction layer and oxygen evolution layer comprise a nickel-based support;
   b.4) a separator disposed between the air electrode and the zinc electrode and located within the cavity adapted to house the aqueous solution;
c) a mechanism for allowing the circulation of the aqueous solution through the battery stack and the tank.

### DETAILED DESCRIPTION OF THE INVENTION

In the context of the present invention, the term "flow battery" is intended to refer to a battery system in which reactants and products are transported into and out of the battery. For the zinc-air flow battery of the invention, it implies that the precursor of the electrodeposited metallic zinc and the electrolyte are introduced (e.g., pumped) into the battery and the oxidized zinc (in the form of zincate ion) is removed from or taken out of the battery system during operation.

The zinc-air battery of the invention is configured to act as an energy storage and conversion system. In particular, the zinc-air flow battery is a secondary or rechargeable battery, i.e. it is configured to be reversibly charged and discharged.

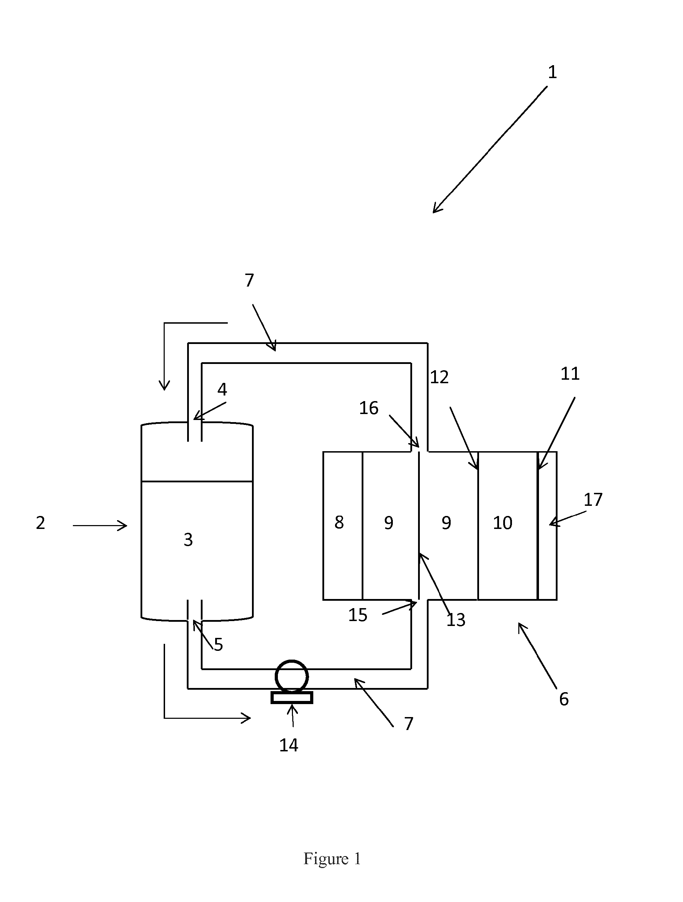

An exemplary embodiment of the zinc-air flow battery of the invention is illustrated in Figure 1.

### Tank

The tank (2) comprised in the zinc-air flow battery (1) of the invention is an external container configured to store an aqueous solution (3) of zinc oxide in an electrolyte.

The electrolyte is an alkaline electrolyte used to maintain a high ionic conductivity between the zinc and air electrodes. Particularly, the electrolyte may be any electrolyte that has high ionic conductivity and/or high reaction rates for the oxygen reduction/evolution and the metal oxidation/reduction reactions.

In a preferred embodiment, said electrolyte is a hydroxyl ion-conducting media, more preferably an alkaline metal hydroxide, even more preferably, the alkaline metal hydroxide is potassium hydroxide (KOH).

The aqueous solution may have different proportions of zinc oxide and alkaline metal hydroxide, however, it is desirable a high concentration of zinc from the scaling point of view and to obtain higher energy densities and, in general, better results. In a preferred embodiment, the concentration of zinc oxide ranges from 5 to 100 g/L, more preferably from 30 to 50 g/L, whereas the concentration of alkaline metal hydroxide may range from 5 to 12 M, more preferably from 6 to 9 M, being preferred the use of KOH in a concentration ranging between 7 and 8 M.

In a preferred embodiment, the aqueous solution (3) further comprises additives which increase the coulombic efficiency, avoiding parasitic reactions such as hydrogen evolution. Examples of these additives include Sb(III), Indium oxide In₂O₃, tartaric acid, succinic acid, phosphoric acid, citric acid, Na₂WO₄, cetylpyridinium chloride (CPC).

The aqueous solution (3) may also preferably comprise other additives which allow the metallic zinc deposits to grow compact and uniform on the anode support. Among these additives, dimethylaminopropylamine (DMAPA), SLS (sodium lauryl sulphate), quaternary ammonium salts, such as Aliquat336, polyvinyl alcohol (PVA), lead ions, tetrabutylammonium bromide (TBAB) can be used.

Furthermore, other additives which increase zincate solubility, such as lithium, silicates and sorbitol, can also be added. In a preferred embodiment, said additive is Mirapol® WT.

The tank (2) is provided with at least an inlet (4) and an outlet (5) to allow the entrance and exit of the aqueous solution (3) into or from the tank, respectively, during the operation of the battery.

The tank (2) is configured to be modular, replaceable and scalable independent of the battery stack (6). As mentioned before, increasing the amount of zinc in the aqueous solution generally increases the energy that the zinc-air flow battery is able to provide. Accordingly, the greater the volume of the tank, the more energy the zinc-air flow battery is able to provide.

In a particular embodiment, the battery stack (6) may be coupled to multiple tanks, thereby providing for increased zinc storage capacity.

Generally, the tank (2) may be disposed adjacent to the battery stack (6) or located at a distance from the battery stack (6), so as the tank (2) is in fluid communication to the battery stack (6) through conduits or pipes (7).

In a particular embodiment, the tank is made of a plastic material (e.g., polypropylene, polyethylene, etc.) or a plastic-coated material (e.g., a plastic-coated, steel tank) to substantially avoid corrosion of the zinc due to galvanic coupling. In another particular embodiment, the tank is made of any metallic material that avoids corrosion, such as nickel or nickel alloys.

### Anode

The battery stack (6) included in the zinc-air battery of the invention comprises an anode (8), also called the zinc electrode. This electrode comprises a support which must have good electrical and thermal conductivity and mechanical resistance. In addition, it must have good corrosion resistance and low permeability to gases and liquids. It is desirable that the material is low cost and also recyclable and non-toxic.

Carbon composite materials can fulfil all these requirements. Therefore, in a preferred embodiment, the electrode support is made of a mixture of a carbon material and a polymer matrix. Carbon material provides electrical and thermal conductivity and the polymer matrix provides mechanical stability and low permeability. Carbon composites are cheaper and have higher chemical stability than other materials commonly used for zinc deposition, such as copper and aluminium.

Examples of highly conductive carbon materials include natural or synthetic graphite powder, carbon blacks and carbon fibres. In a particular embodiment, the carbon material is a flat plate of graphite. In another particular embodiment, the carbon material is a graphite porous structure, such as a carbon foam, carbon cloth or carbon felt.

The polymers may be thermoplastics such as polyethylene, polypropylene, polyphenylene sulfide polyvinylidenefluoride, polytetrafluoroethylene, or thermosets, such as vinyl ester, phenolic resins, and epoxy resins. In a preferred embodiment, the carbon composite is 2114-45 supplied by Mersen.

In another preferred embodiment, the anode is submitted to a pre-treatment previously to being charged and discharged.

In a particular embodiment, the anode surface is impregnated with a surfactant in order to improve the wettability of its surface. Graphite supports as previously described, are partially hydrophobic. Surfactant can be applied prior to charging the battery for the first time or can be incorporated in the electrolyte solution. Possible surfactants that can be employed are Triton X100, perfluorosurfactants such as FC-170C and CTAB. In a particular embodiment said surfactant is Triton X100. Electrode is dipped in a 0,03% surfactant solution and air dried prior to battery assembly.

Metallic zinc is electrodeposited on the surface of the support as will be described in detail below.

As mentioned before, the use of additives, such as Mirapol® WT, in the aqueous solution of zinc and electrolyte also allows the metallic zinc deposits to grow compact and uniform on the anode support.

### Cavity

The battery stack (6) included in the zinc-air battery of the invention also includes a cavity (9) for housing the circulating aqueous solution containing the electrolyte. While said aqueous solution is circulating through the battery stack, it is in contact with the zinc electrode (8) and the air electrode (10) allowing the electrochemical reactions to take place as it is described below.

Said cavity (9) is also provided with one or more inlets (15) and one or more outlets (16) in order to allow the fluid communication of the battery stack (6) with the tank (2).

### Air electrode

The air electrode (10) contained in the battery stack (6) is a bifunctional electrode, understanding as such an electrode designed to act either as a cathode or an anode, depending on whether the oxygen reduction or oxygen evolution reaction takes place. Both reactions are carried out in a triple solid-liquid-gas boundary formed by the oxygen, the liquid aqueous solution containing the electrolyte and a solid catalyst.

The air electrode (10) comprises two portions or layers, each layer being optimized for one of the oxygen evolution reaction and the other for oxygen reduction reaction. That is, both the oxygen evolution reaction and the oxygen reduction reaction are split: one reaction taking place in a first portion of the air electrode, shown as the oxygen reduction layer (11) and the other taking place in a second portion of the air electrode, shown as the oxygen evolution layer (12).

The oxygen evolution layer (12) is disposed between the zinc electrode (anode) and the oxygen reduction layer and constitutes the electrolyte-facing side of the air electrode that contacts the electrolyte. In this position, the oxygen evolution layer may more readily intercept hydroxyl ions leaving the zinc electrode during charging, facilitating the oxygen evolution reaction. This layer is a water attracting region and includes a porous structure which is hydrophilic in order to allow the electrolyte to penetrate into the reaction zone for the oxygen reaction (e.g., by capillary forces). However, it may also include a hydrophobic region to avoid the transfer of the electrolyte to the oxygen reduction layer. The pores of the oxygen evolution layer are also configured to provide a support for a catalyst or a combination of catalysts.

The oxygen reduction layer (11) is disposed in the external side of the air electrode and constitutes the air-facing side that contacts the ambient air. This layer is generally opposite the electrolyte-facing side. In this position, oxygen entering from ambient air may more readily access the oxygen reduction layer facilitating conversion of the oxygen to hydroxyl ions. This layer is a water repelling region and includes hydrophobic pores which help achieve high rates of oxygen diffusion while avoiding the introduction of the electrolyte within the pores. The pores of the oxygen reduction layer are also configured to provide a support for a catalyst or a combination of catalysts.

With this architecture of layers, electrolyte that draws into the hydrophilic region of the air electrode does not readily cross over into the hydrophobic region of the air electrode and therefore, liquid electrolyte does not wet the air-facing side. If the air-facing side were to become wet with liquid electrolyte (a condition known as "flooding"), oxygen permeation would become severely restricted and cell performance (which relies on oxygen gas entering and leaving the air electrode) would be markedly impaired.

The pore forming material used in the air electrode of the zinc-air flow battery of the invention is nickel-based material. It serves as support of the electrode wherein the catalyst or a mixture of catalysts is deposited. However, said nickel-based material may also act as an additional catalyst for the oxygen reactions.

In a particular embodiment, the nickel-based material is Raney nickel or carbonyl nickel.

Carbonyl nickel has a fine, highly three-dimensional and filamentary ("chain-like") structure. This material provides a fine, three-dimensional structure to the air electrode with high electronic conductivity that is suitable to form the three phase boundary for oxygen reduction and oxygen evolution reactions to take place.

Raney nickel is provided in the form of fine particles having a very high specific surface area which contributes to increase the surface area of the three phase boundary. Furthermore, Raney nickel can be used as a catalyst for the oxygen reactions.

As mentioned before, the pores of the oxygen evolution and oxygen reduction layers are also configured to provide a support for a catalyst or a combination of catalysts. Generally, the catalysts comprised in the zinc-air flow battery of the invention are solids and dispersed throughout the pore structure.

The catalysts are configured to improve the reaction rate of the oxygen reactions within the battery, including the oxygen reduction and evolution reactions. Solid catalysts may include catalytically active metals or oxygen-containing metal salts, such as platinum, palladium, ruthenium, silver, cobalt, iron, manganese, copper, nickel, MnO₂, KMnO₄, MnSO₄, SnO₂, Fe₂O₃, CoO, Co₃O₄ and any suitable mixtures or alloys of the above materials. Other catalysts may include WC, TiC, CoWO₄, NiS, WS₂, La₂O₃, Ag₂O or Ag.

In a particular embodiment, non-noble metal catalysts for oxygen reduction and oxygen evolution are preferred since they have similar activity to noble metal catalysts at a lower cost. Suitable non-noble catalysts include transition metal oxides and mixed oxides such as spinels (i.e., a group of oxides of general formula AB₂O₄, where A represents a divalent metal ion such as magnesium, iron, nickel, manganese and/or zinc and B represents trivalent metal ions such as aluminium, iron, chromium and/or manganese), perovskites (i.e., a group of oxides of general formula AXO₃, where A is a divalent metal ion such as cerium, calcium, strontium, lead and/or various rare earth metals, and X is a tetrahedral metal ion such as titanium, niobium and/or iron where all members of this group have the same basic structure with the XO₃ atoms forming a framework of interconnected octahedrons) or pyrochlores. Perovskites may be partially substituted with other metals such as silver or palladium which enhance the catalyst activity at small overcost. A combination of more than one of the foregoing materials may be used.

Preferred catalysts are simple and mixed oxides of manganese, cobalt or nickel, such as MnO₂, Co₃O₄ or NiCo₂O₄. Catalysts may be supported or unsupported on nickel particles. More preferably the catalyst is MnO₂ which can be prepared as defined in example 1 and following the procedure described, for example, in Journal of Non-crystalline Solids, 2001, 285, 288-294 and Colloids and Surfaces A: Physicochem. Eng. Aspects, 2006, 289, 185-192 which are herewith incorporated by reference.

In another preferred embodiment, catalysts are in the form of particles with nanometer size to increase the surface area.

The air electrode may also include a gas diffusion layer (17) which includes a plurality of pores. Said layer is configured to be porous and hydrophobic, allowing oxygen to flow through the pores while acting as a barrier to also prevent liquid flow. Said gas diffusion layer may be electronically conductive or not and is disposed on the external side of the oxygen reduction layer. Examples of this hydrophobic layer are spayed PTFE or expanded PTFE film.

The air electrode may also include a binder that provides for increased mechanical strength of the air electrode as it binds the components of the air electrode together, while still allowing the air electrode to have relatively high diffusion rates of oxygen. The binder agent may also cause pores in the air electrode to become hydrophobic to limit the amount of liquid transport through the air electrode. In a particular embodiment, binder may include, but are not limited to, polymers and/or other materials that are hydrophobic and stable in an alkaline environment. These materials can be used alone or in combination.

The binder may include, for example, polymeric materials such as polytetrafluoroethylene (PTFE), polyethylene (PE), polypropylene (PP), polyisobutylene (PIB), thermoplastics such as polybutylene terephthalate (PBT) or polyamides, polyvinylidene fluoride (PVDF), silicone-based elastomers such as polydimethyl siloxane (PDMS) or rubber materials such as natural rubber (NR), ethylene propylene rubber (EPM) or ethylene propylene diene monomer rubber (EPDM), or combinations thereof. In a particular embodiment, the use of polytetrafluoroethylene (PTFE) as binder is preferred as it provides an excellent oxygen transport.

In another particular embodiment, the binders such as PP and/or PE may be used as the only binders in a particular layer. According to other embodiment, binders such as PP and/or PE may be used in combination with PTFE in a particular layer to allow the benefits of PTFE to be balance with the benefits of PP and/or PE (which act to increase the mechanical strength of the air electrode).

For example, it may be desirable to provide a higher or different binder content in the oxygen reduction layer to form a hydrophobic barrier layer to prevent liquid penetration, while it may be desirable to use a lower binder content in the oxygen evolution layer to allow for a partially flooded electrode with a well-defined three-phase boundary.

In some embodiments, the binder in each layer of the air electrode is the same (e.g., the oxygen reduction layer and the oxygen evolution layer use PTFE in combination or not with PP and/or PE, and the percentages of each in the layer may be the same or different). In other embodiments, the type of binder in the layers may differ (e.g., the oxygen reduction layer may use PP and/or PE with or without PTFE, while the oxygen evolution layer includes only PTFE as a binder).

The surface area of the air electrode is substantially proportional to its rate capability. Accordingly, the surface area of the air electrode may be increased or decreased to help achieve a desired discharge/charge rate and/or to achieve a desired power density.

The air electrode is also configured to act as an electrical conductor through which electric current flows out during operation of the zinc-air flow battery of the invention.

Accordingly, the air electrode may further comprise a current collector. Said current collector may be formed of any suitable electrically-conductive material.

In a particular embodiment, the nickel-based material used as support of the air electrode can also act as current collector since it is an electrically-conductive material.

In another particular embodiment, the air electrode comprises a current collector different from the nickel-based support. In this case, the current collector may be disposed on the oxygen reduction layer, on the oxygen evolution layer or between both layers. When the air electrode also comprises a gas diffusion layer, the current collector may be disposed between the gas diffusion layer and the oxygen reduction layer or the oxygen evolution layer.

The current collector may include a metal selected from the group consisting of nickel, titanium, niobium or zirconium. The current collector need not be a metal per se and may include other electrically conductive species such as conductive polymers, silicon, carbides, other carbon-based conductive materials such as graphite, and even metals that are coated with any of the above listed materials to protect it from corrosion. The selected current collector may have an exposed surface which may include a metal or material selected from the group described above.

The current collector may itself form or include a suitable substrate. In some embodiments, the current collector may comprise a perforated structure, an expanded or mesh screen, a woven structure, pressed or sintered powder, a porous sandwich formulation that may provide additional surface area, a shell, or a fabric encasing one or more layers. For example, a current collector may include a perforated metal structure, an expanded screen, a woven metal structure, a plastic shell, or a fabric encasing a conductive inner layer and carbon. In some embodiments, the current collector may be a perforated or woven conductive polymer or conductive carbon structure. The current collector may include pores, channels, passages, surface features, or permeable materials. In some instances, current collectors may even include non-porous or impermeable portions or regions.

In a particular embodiment, the external surface of the air electrode is in direct contact with the surrounding environment and therefore, the oxygen from it may be evenly distributed over the entire air electrode since there is no housing between the air electrode and the environment. Accordingly, the external surface of the air electrode may be positioned such that it also forms a portion of an external surface of a device in which the battery is used (e.g., the air electrode that defines a portion of the housing may also serve as a portion of the outer surface of the housing for a device, in which case the air electrode would be directly in contact with the environment outside the device). In this particular case, the metal-air battery is fed with the oxygen present in the atmosphere surrounding the air electrode.

In another particular embodiment, the air electrode is enclosed in a protective casing. This casing is configured to protect/prevent damage to air electrode, to act as the current collector for air electrode and/or to resist corrosion. Said protective casing includes a plurality of openings configured to allow fluids to flow therethrough to react with the air electrode. In particular, gases such as air and/or oxygen can flow (e.g. be diffused, be distributed, etc.) through the openings and enter into the air electrode. The air/oxygen may come from the atmosphere or may be supplied and distributed to the air electrode through the openings by means of a compressor at a desired pressure.

The protective casing may be made of nickel, nickel-coated steel or any other conductive metal or metal alloy or carbon composite with at least some resistivity toward the materials of the electrolyte.

The preparation of the air electrode includes a multi-step process. First, the desired component elements of the air electrode are mixed together. The pore forming materials, the catalysts, the possible binding materials and/or other possible additives are mixed under the influence of mechanical, thermal, or mechanical and thermal energy. It is desirable that the materials be well distributed. If the mixture contains a hydrophobic binder, then this binder forms a three dimensional network connecting the powders into an agglomerate.

According to an exemplary embodiment, a dry mixing process is utilized in this first step. In a dry mixing process, all of the ingredients of the air electrode are mixed together in the form of dry powders. The resulting mixture is subsequently milled in, for example, a cutting mill.

Second, the mixture is formed into a layer. In a particular embodiment, the powder mixture obtained in the first step is evenly distributed into a mold, wherein a fine nickel mesh with the same dimensions of the mold is placed on the top of the powder. The mesh and the powder are subsequently pressed at a given temperature and pressure in order to obtain a thin layer.

In a third step, the obtained layer is subjected to a heating process in order to sinter the nickel particles. Preferably, said heating process involves the introduction of the layer in an oven with an air atmosphere or inert atmosphere or reducing atmosphere at a temperature that allows the sintering of the particles.

Alternatively, when the air electrode includes a binder agent, the third step may be carried out by subjecting the layer obtained in the second step to a heating process in order to sinter the binder agent. Said heating process may also involve the introduction of the layer in an oven with an air atmosphere or inert atmosphere or reducing atmosphere at a temperature that allows the sintering of the binder agent. Thus, the sintering of the binder takes place, thus improving the mechanical properties of the air electrode.

In a particular embodiment, the air electrode further includes a gas diffusion layer. Said gas diffusion layer may be obtained using a mixture of a binding agent (e.g., PTFE) and ammonium bicarbonate as a pore forming agent. The binding agent and the pore forming agent are mixed at a desired temperature in a single-shaft rotary mixer to form an agglomerate. The agglomerate is pressed into a brick and then calendered into a sheet.

The active layer and the gas diffusion layer are coupled together or may be joined using heat and/or pressure (e.g., by calendaring and/or pressing).

When the air electrode further comprises a current collector different to the nickel substrate used as support, said current collector is coupled (e.g., pressed or calendered) into the combined layers (e.g., into the active layers, into the gas diffusion layer, between the active and the gas diffusion layers) following a process such as that described above for the coupling of the active layers and the gas diffusion layer.

### Separator

The battery stack (6) included in the zinc-air battery of the invention also includes a separator (13) which is positioned between the air electrode (10) and the zinc electrode (8) and within the cavity (9) for housing the circulating aqueous solution into the battery stack. This separator is a thin, porous film or membrane made of a polymeric material.

In a particular embodiment this separator is an ion exchange membrane that allows passing of positively or negatively charge ions from the zinc electrode or *vice versa* depending on the operation mode of the battery. Various advantages derived from the incorporation of the ion exchange membrane into the zinc-air battery arise. For example, the presence of an ion exchange membrane may advantageously reduce or prevent migration of zincate ions toward the air electrode, thus reducing even less the tendency to form dendrites that may cause short circuits within the battery between the zinc electrode and the air electrode. Limiting the zincate diffusion may provide more even depositions through the bulk of the zinc electrode, fewer surface reactions, and thus fewer tendencies for dendrites and shape changes. The ion exchange membrane also may mitigate or prevent the leaching of catalysts or impurities from the air electrode to the zinc electrode, thus reducing the tendency of the zinc electrode to experience undesirable gassing that may degrade the performance of the battery over time. The ion exchange membrane also may help to prevent breakdown of the air electrode and to assist in the maintenance of a stable three phase boundary at the air electrode.

In a preferred embodiment, the separator is made of polypropylene or polyethylene which is treated to develop hydrophilic pores that are configured to fill with the electrolyte. This type of separator is cheaper, more robust and less resistant to the passing of ions than most ion exchange membranes. In a preferred embodiment, the polymer film is Zirfon Perl supplied by Agfa.

The zinc-air battery of the invention also includes means (14) or a mechanism for allowing the circulation of the aqueous solution containing the zinc and the electrolyte through the tank (2) and the battery stack (6). The distribution of the flow of this aqueous solution is really important as it should be homogenous while assuring for a good material transport to the electrodes. There are many mechanisms in the state of the art for allowing said distribution of the aqueous solution, commonly known as manifolds. This mechanism includes, for example, a gravitational tap feeder or a pump. Preferably, said mechanism is a pump.

The hydrodynamic conditions within the cavity (9) of the battery stack (6) depend not only of the mechanism used but also on the inlet flow, dimensions and width of the cavity. A reference parameter is the electrolyte linear rate. In a preferred embodiment, said electrolyte linear rate ranges from 1 to 10 cm/s, more preferably between 1 and 5 cm/s.

As mentioned before, the zinc-air flow battery is configured to act as an energy storage and conversion system, i.e. it is configured to be reversibly charged and discharged. An illustrative example on how the zinc-air flow battery of the invention work is following described and shown in Figure 1.

During the charging process, the aqueous solution (3) of zinc oxide in the electrolyte contained in the tank (2) is transferred from said tank (2) to the battery stack (6) by means of the pump system (14).

In said aqueous solution, the zinc oxide and the electrolyte (potassium hydroxide or other hydroxyl ion source) react according to the following reaction:

ZnO + 2KOH + 2H₂O ↔ K₂Zn(OH)₄

Said solution exits the tank (2) through the tank outlet (5) and is distributed along the pipes (7) until it reaches the cavity (9) of the battery stack (6), so as said solution is in contact with the anode (zinc electrode) (8) and the air electrode (10). The flow of said solution increases the transfer speed of the zincate ion (Zn(OH)₄⁼) and the electrolyte near electrode surface, eliminating the concentration polarization and inhibiting the dendrite growth during charging.

The zincate ions present in said circulating solution are reduced during the charging process to metallic zinc according to the following reaction:

Zn(OH)₄⁼ + 2e⁻ → Zn⁰ + 4OH⁻

Said metallic zinc is deposited on the surface of the support of the anode (8), thus forming an electrode wherein zinc is electrodeposited, as electrons are consumed and stored.

Hydroxyl ions of the electrolyte are converted to oxygen in the air electrode (10) adding oxygen to the air flow according to the following reaction:

2OH⁻ - 2e⁻ → 1/2O₂ + H₂O

During discharge, the oxygen for the air flow is converted to hydroxyl ions in the air electrode (10). This reaction generally involves a reduction of oxygen and consumption of electrons to produce the hydroxyl ions. Said hydroxyl ions then migrate toward the zinc electrode (8) wherein zinc has been previously electrodeposited, thus causing the oxidation of the zinc, liberating electrons and providing power, according to the following reactions:

1/2O₂ + 2e⁻ + H₂O → 2OH⁻

Zn - 2e⁻ + 4OH⁻ → Zn(OH)₄⁼

The air can be supplied by means of a compressor without any previous treatment or, alternatively, may be treated by means of CO₂ filters, humidifiers or heaters. Pure oxygen or enriched air may also be used.

When discharge is completed, the zinc on the negative electrode (8) is dissolved and the negative electrode is restored to the original state, thus making this electrode rechargeable.

As the pump system (14) continues to operate, the zincate ions produced from the oxidation of zinc continue to be transported from the reaction zone through the inlet (4) and stored in the tank (2).

The electrolyte (hydroxyl ion-conducting media) is not consumed by the electrochemical reactions within the battery but, rather, is configured to provide for the transport of the hydroxyl ions (OH⁻) from the air electrode to the zinc electrode during discharge and from the zinc electrode to the air electrode during charge.

Therefore, the zinc-air flow battery of the invention can be considered as a closed loop system wherein the inlet (4) and outlet (5) of the tank (2) are in fluid communication with the battery stack (6), allowing the flowing of zincate ions to be transported into and out of the battery stack (6) depending on the operation mode of the zinc-air battery.

In a particular embodiment, the operation conditions of the zinc-air battery includes an electrolyte working temperature ranging from 20 to 90°C, preferably from 40 to 70°C,whereas the differential air pressure is in the range from 0 to 1 bar, preferably from 0 to 0,2 bar.

### Applications

The rechargeable zinc-air flow battery is configured to provide energy storage and conversion. It may be used individually, in a modular zinc-air flow battery system, or in combination with other energy storage technologies (e.g., supercapacitors, etc.) and may be integrated into or with various systems and/or devices to improve efficiency, address energy demands, etc. Furthermore, the rechargeable zinc-air battery of the invention may be used in a variety of applications having different energy conversion and/or storage needs, including, but not limited to, very large scale applications (e.g., utilities, functioning as a green energy source for a smart grid, energy storage for use in combination with renewable energy resources such as wind and solar power, etc.) and smaller applications (e.g. backup power, residential power, etc.).

### EXAMPLES

### Example 1. Catalyst preparation MnO₂)

The precursors employed for the synthesis of nanostructured high surface area MnO₂ were the following:
- KMnO₄ Potassium permanganate puriss. p.a., ≥99.0% (RT), Fluka, ref. 60460
- CH₃COOK Potassium acetate, ACS reagent, ≥99.0%, Sigma-Aldrich, ref. 236497
- CH₃CO₂H Acetic acid glacial, ≥99.85%, Sigma-Aldrich, ref. 695084
- Mn(CH₃COO)₂ 4H₂O Manganese(II) acetate tetrahydrate purum p.a., ≥99.0% (KT), Sigma-Aldrich, ref. 63537

The synthesis procedure is based on the refluxing method. This procedure yields MnO₂ with a nanometer sized, filament type structure. This structure has a very high surface area that increases the catalyst activity and favours the formation of the three-phase boundary.

In a first step, a solution of manganese acetate was prepared at a concentration of 1.12 M by dissolving 11 g of Mn(CH₃COO)₂ in 40 ml of Milli-Q water (purified water).

In a second step, a buffer solution with a concentration of 1.15 M was prepared by dissolving 5 g of K(CH₃COO) in 40 ml Milli-Q water and 5 ml of glacial acetic acid.

Then, in a third step, the solution of Mn(CH₃COO)₂ and the buffer solution of K(CH₃COO) were mixed in a boiling flask with magnetic stirring. The boiling flask must have a dropping funnel for the following step. The mixture was heated to 100°C.

In a forth step, a solution of KMn04 with a concentration of 0.26 M was prepared by dissolving 6.5 g of KMn04 in 150 ml of purified water. When the mixture of Mn(CH₃COO)₂ and K(CH₃COO) solution began to boil, the KMnO₄ solution was added drop-wrise through the dropping funnel. The mixture was left in reflux for 24 hours.

In a fifth step, the solid residue was filtered from the previous step and washed with purified water. The solid was dried in an oven at 120°C overnight and then heated to 450°C at 5°C/min.

Finally, the solid from the calcination step was grinded in a ball mill for 45 minutes with Al₂O₃ balls.

The catalyst obtained in this way has a density of less than 1 g/cm³, a particle size less than 100 nm and BET surface area higher than 90 m²/g.

### Example 2. Preparation of the catalyst layer in the air electrode

The catalyst and the nickel particles are mixed with polytetrafluorethylene (PTFE) particles in the form of a dry powder. Mixing with dry PTFE powder rather than an aqueous suspension of PTFE favours the even distribution and homogeneity of the mixture.

### Step 1. Mixing

The catalytic layer is made up of the following components:
- 70% Nickel from carbonyl nickel
- 5% Raney nickel
- 20% PTFE
- 5% MnO₂ prepared as described in example 1

The components were mixed manually with a spatula and kneaded in an agate mortar and pestle set. The resulting mixture was milled in a cutting mill for approximately one minute.

### Step 2. Pressing

175 mg of the powder were evenly distributed into a 55 x 55 mm mold. A fine nickel mesh with the same dimensions was placed on top of the powder. The mesh and the powder were pressed at room temperature at a pressure of 167 kg/cm² for approximately 3 minutes.

### Step 3. Sintering

The electrode was introduced into an oven with an air atmosphere or inert atmosphere or reducing atmosphere at 370°C for 10 minutes. Sintering of PTFE took place which improves the mechanical properties of the electrode.

### Step 4. Hydrophobic layer

Optionally a hydrophobic layer may be added to the air side of the electrode to ensure electrolyte does not leak in case of irregular or anomalous operating conditions or electrode failure. This layer must be permeable to gases. This layer may be electronically conductive or not. Examples of this hydrophobic layer are spayed PTFE or expanded PTFE film.

### Example 3. Measurement of the bifunctional air electrode potential

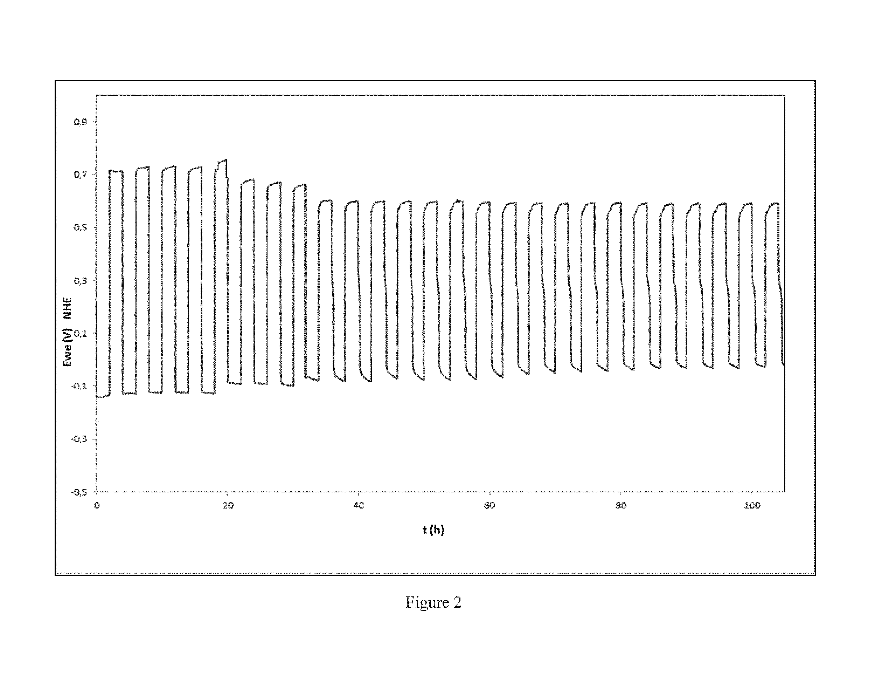

A catalyst layer obtained following example 2 was used as air electrode. Said air electrode was used as the working electrode of an electrochemical half-cell, whereas a nickel sheet was used as the counter-electrode. The electrolyte used was KOH 6M at 60°C. The air was supplied by means of a compressor and treated by means of a CO₂ filter. As shown in Figure 2, the working electrode potential was 0.6V_{NHE} when the evolving oxygen reaction took place and -0.05 V_{NHE} when the oxygen reduction reaction took place. Changes in performance were not observed after 100h of cycling, being cycles defined as 2 hours of oxygen reduction followed by 2 hours of oxygen evolution, both at 25 mA/cm².

### Example 4. Operation of the zinc-air battery

A zinc-air battery was prepared comprising:
a) a tank containing an aqueous solution of 50 g/L of zinc oxide and 7M potassium hydroxide, in which 1.5 g/L of Mirapol® WT was added as an additive, the temperature of the electrolyte being 40°C;
b) a battery stack containing:
   b.1.) a zinc electrode with a support made of the carbon composite 2114-45 supplied by Mersen;
   b.2.) a cavity to house the aqueous solution;
   b.3.) a nickel-based bifunctional air electrode obtained according to example 2;
   b.4.) a gas chamber containing a flow field for air distribution;
   b.5.) a separator which is Zirfon Perl ™ supplied by AGFA, consisting of an open mesh polymer fabric, which is symmetrically coated with a mixture of a thermoplastic polymer and zirconium oxide.
c) a mechanism for allowing the circulation of the aqueous solution through the battery stack and the tank;
d) a mechanism for allowing air circulation through the gas chamber.

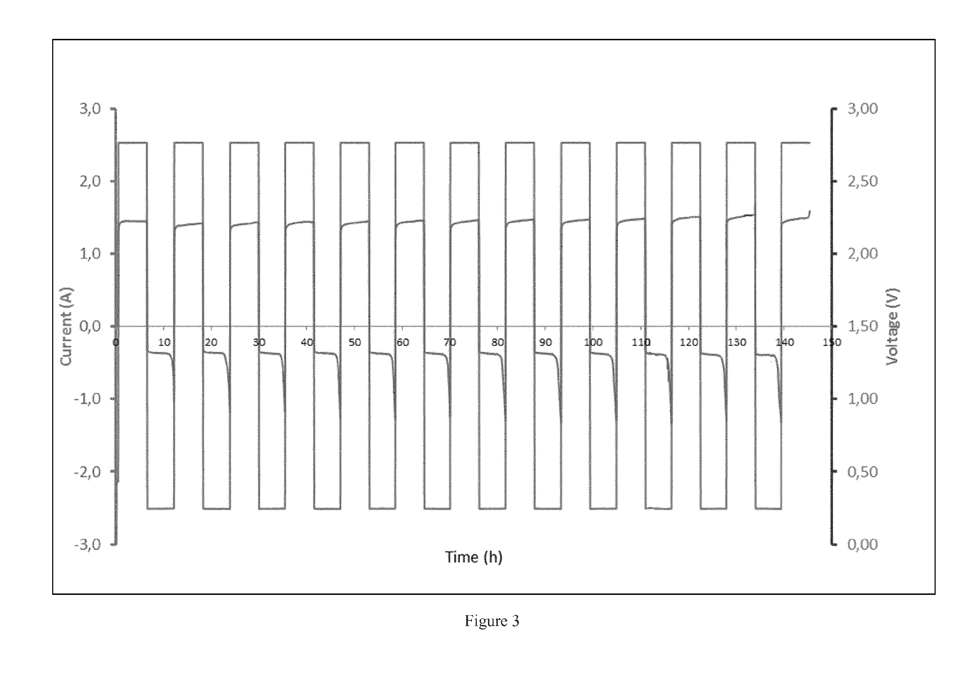

As shown in Figure 3, the system described above resulted in >50% round trip efficiency and changes in performance were not observed after 145h of cycling, being the cycles defined as 6 hours of oxygen evolution followed by 6 hours of oxygen reaction both at 25 mA/cm².

## Claims

1. A rechargeable zinc-air flow battery comprising:
a) at least one tank configured to contain an aqueous solution of zinc oxide in an alkaline metal hydroxide, said tank provided with at least an inlet and an outlet to allow the circulation of the aqueous solution through the tank;
b) a battery stack in fluid communication with the tank, said battery stack comprising:
b.1) a zinc electrode which comprises: (i) a support, said support comprises a carbon composite, and (ii) metallic zinc electrodeposited on the surface of the support;
b.2) a cavity adapted to house the aqueous solution, said cavity provided with an inlet and an outlet so as to allow the continuous circulation of the aqueous solution through the cavity;
b.3.) a bifunctional air electrode comprising an oxygen reduction layer, an oxygen evolution layer and, optionally, a gas diffusion layer, **characterized in that** both the oxygen reduction layer and oxygen evolution layer comprise a nickel-based support;
b.4) a separator disposed between the air electrode and the zinc electrode and located within the cavity adapted to house the aqueous solution;
c) a mechanism for allowing the circulation of the aqueous solution through the battery stack and the tank.

2. The rechargeable zinc-air flow battery according to claim 1, wherein the concentration of zinc in the aqueous solution contained in the tank ranges from 5 to 100 g/L.

3. The rechargeable zinc-air flow battery according to any one of claims 1 and 2, wherein the concentration of alkaline metal hydroxide in the aqueous solution contained in the tank ranges from 5 to 12 M.

4. The rechargeable zinc-air flow battery according to any one of claims 1 to 3, wherein the alkaline metal hydroxide is potassium hydroxide.

5. The rechargeable zinc-air flow battery according to any one of claims 1 to 4, wherein the carbon composite comprised in the zinc electrode is made of a carbon material and a polymer matrix.

6. The rechargeable zinc-air flow battery according to claim 5, wherein the carbon material is selected from natural or synthetic graphite powder, carbon black and carbon fibers.

7. The rechargeable zinc-air flow battery according to any one of claims 1 to 6, wherein the nickel-based support comprises a nickel-based material selected from Raney nickel or carbonyl nickel.

8. The rechargeable zinc-air flow battery according to any one of claims 1 to 7, wherein the air electrode further comprises a non-noble metal catalyst.

9. The rechargeable zinc-air flow battery according to claim 8, wherein the non-noble metal catalyst is selected from transition metal oxides and mixed oxides selected from spinels, perovskites and pyrochlores.

10. The rechargeable zinc-air flow battery according to claim 9, wherein the non-noble catalyst is selected from simple and mixed oxides of manganese, cobalt or nickel.

11. The rechargeable zinc-air flow battery according to claim 9, wherein the non-noble catalyst is selected from MnO₂, Co₃O₄ and NiCo₂O₄.

12. The rechargeable zinc-air flow battery according to any one of claims 8 to 11, wherein the catalyst is in the form of particles with nanometer size.

13. The rechargeable zinc-air flow battery according to any one of claims 1 to 12, wherein the air electrode further comprises a binder which is polytetrafluoroethylene.

14. The rechargeable zinc-air flow battery according to any one of claims 1 to 13, wherein the gas diffusion layer is made of spayed PTFE or expanded PTFE film.

15. The rechargeable zinc-air flow battery according to any one of claims 1 to 14, which further comprises a current collector.
